# EUROPEAN PATENT APPLICATION

(11) **EP 2 201 835 A1**
(43) Date of publication of application: **30.06.2010**
(21) Application number: 08839680.9
(22) Date of filing: 07.10.2008
(51) Int. Cl.: A01K 1/02, A01K 1/00

(54) **FACILITY FOR REARING BARN ANIMALS**

(30) Priority: 16.10.2007 ES 200702701
(71) Applicant: Gaiapork DWCT, S.L., 08756 La Palma de Cervello (ES)
(72) Inventor: VELEZ CAMPILLO, Javier, 08756 La Palma de Cervello (ES)
(74) Representative: Sugrañes Patentes y Marcas
(86) International application number: PCT/ES2008/000627
(87) International publication number: WO 2009/050313

(57) **Abstract**

The invention relates to a facility for rearing barn animals, particularly pigs, including: covered animal confinement modules provided with respective feeding troughs, feed preparation means, and a system for transporting feed from the preparation means to the feeding troughs. The confinement modules are distributed radially around a central area which houses the feed preparation means and is provided with at least one peripheral biosanitary passageway for the movement of animals, from which the confinement modules can be accessed. In addition, the feed transport system includes radial channels for transporting feed and valves enabling the selective distribution of feed through the channels.

## Description

### Technical field of invention

The presented invention refers to facilities for livestock rearing, specifically to pig rearing.

### Background of the invention

Up until now rearing of farm animals for human consumption, such as bovine, sheep, poultry and pigs, has been mainly carried out through pasture of animals until they reached appropriate weight to be supplied on the market. In case of pork and poultry, those were reared in closed facilities to allow necessary control of the animals and their feed supply.

During the last decades livestock and pig production sectors have been focused on optimizing production system through confinement techniques, having cost reduction as their main goal. This lead to the fact, that pork meat is actually one of the cheapest meat products, that one can find on the market. The reduction of costs allowed to approach this product's consumption to all social classes of so-called developed world, nevertheless it also brought some inconveniences, which are nowadays cause of debate.

In contrast, nowadays situation, which takes priority over the size of a business in order to provide its economic efficiency, lead to the fact that over the past years many of small and medium producers had to quit pig production due to lack of competitiveness, therefore depopulating the rural community.

Besides, animal feeding patterns have been designed in order to optimize the relationship between weight gain and feed intake, which reduced to minimum the necessary time for an animal to reach its appropriate weight. The excess of protein supply in order to reach this goal became a serious environmental problem, both in terms of waste and water supply in order to grow the plants used.

On the other hand, due to the facilities' design, the density and conditions of confinement had an impact on animals' immune response, attributing to appearance of diseases. In case of diseases caused by bacteria, it caused resistance to most of existent antibiotics, which are also used for human health.

The actual confinement pattern presents a series of modules, which are oriented in a specific manner and at an equal distance, thus favouring the spread of diseases and rising the maintenance cost of feeding facilities, as generally the feedstuff is supplied through one main channel with branches in each module, or requires an individual facility in each module. The length of main channel causes considerable losses and clogging of its initial or middle parts disables supply for all further modules beyond the plugged part. It is worth saying that sometimes this module distribution requires individual facilities for air treatment.

Due to all of the abovementioned reasons there is a necessity for existence of animal rearing facilities, that will guarantee optimal conditions for animal production and overcome the inconveniences of already existent facilities.

### Explanation of the invention

As a facility for farm animal rearing, pig rearing in particular, it is an object of the present invention to include plural modules of confinement, which are covered and equipped with feeders; the means of preparing the feedstuff; and a system of supply of feedstuff from the mentioned preparation means to the feeders.

In essence, the facility is characteristic because confinement modules are distributed radially around the central covered part, which contains the means of preparing the feedstuff and is provided by at least one perimetral biosanitary corridor for movement of the animals with access to the confinement modules; and because the system of feedstuff supply includes a series of radial channels for transportation of feed from the described central area to the feeders of each respective module of confinement, and feed selection and distribution valves to the channels.

According to a first aspect of the present invention, with the designed layout of confinement modules, conventionally high maintenance costs are reduced greatly thanks to significative reduction of length of feed supply channels. Besides it guarantees that in case of a malfunction of one channel, the rest of channels can continue supplying feed without shutting down the whole facility.

According to a next aspect of the present invention, in reference to health and hygiene characteristics of the facility, this particular layout of independent confinement modules guarantees that the animals are conveniently isolated from one another in order to avoid massive infection in case of a disease spread or similar situation, and it also reduces the distance of movement necessary to take an animal from one module to another.

According to another aspect of the invention, the transportation system includes perimetral channels, connected between two radial channels associated to two different (not necessarily adjacent) modules, and provided by means of feed supply to feeders of modules located along its route.

According to another characteristic of the present invention, the confinement modules are provided with means for air and gas channelling in direction of the central area, in which a central air collector is located, connected to an air treatment unit.

According to a next aspect of the invention, the confinement modules and the free space between them (at the exception of free space between two adjacent modules) are covered with a layer of isolating material. In the preferred type of realization, the layer of isolating material includes a substrate of soil, which preferably can be used for growing of plants.

According to a preferred type of realization of the invention, between at least two adjacent confinement modules, under the layer of isolating material, air supply channels for the interior of the module are located, following a coil-shaped path.

### Brief description of the drawings

The drawings attached illustrate, but are not limited to, a variant of realization according to the invention. In the following drawings:
Figure 1 is the view in perspective of the facility according to the invention;
Figure 2 is a scheme view of feed supply system of the facility in Figure 1;
Figure 3 is a scheme view of another facility according to the invention.

### Detailed description of the drawings

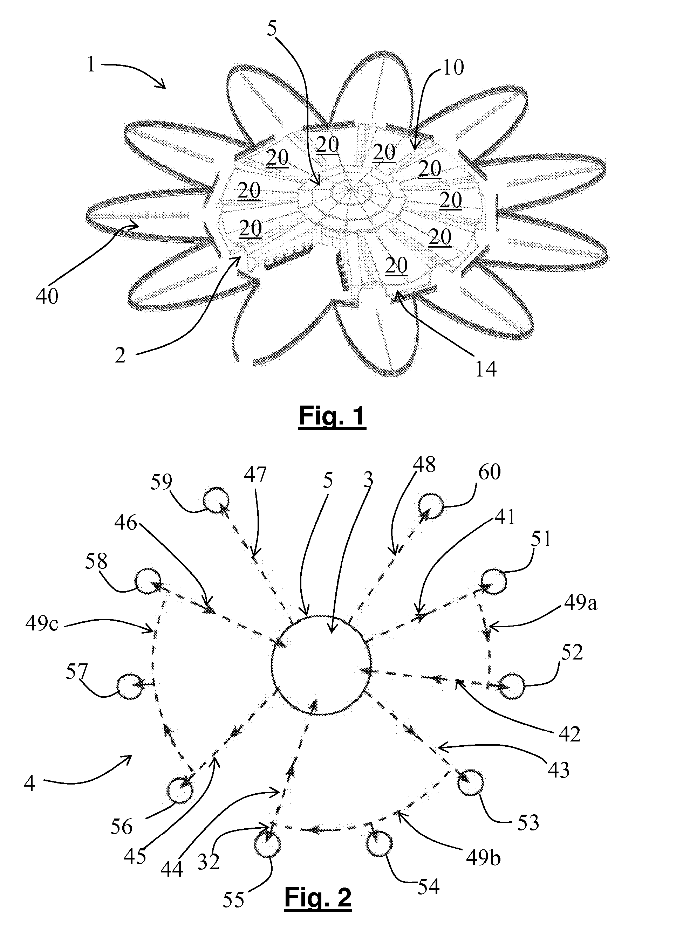

Facility 1 for farm animals rearing, represented in Fig.1 is especially suitable for pig production. The facility 1 includes ten confinement modules 2 for the animals, covered and provided with respective feeders 51 to 60 (not visible in Fig.1), distributed in a radial way around the central part 5, also covered, in which means for feed preparation 3 are located (not visible in Fig.1). Besides, facility 1 includes a transportation system 4, presented as a scheme in Fig.2, for transportation of the feed from preparation means 3 to the feeders 51 to 60.

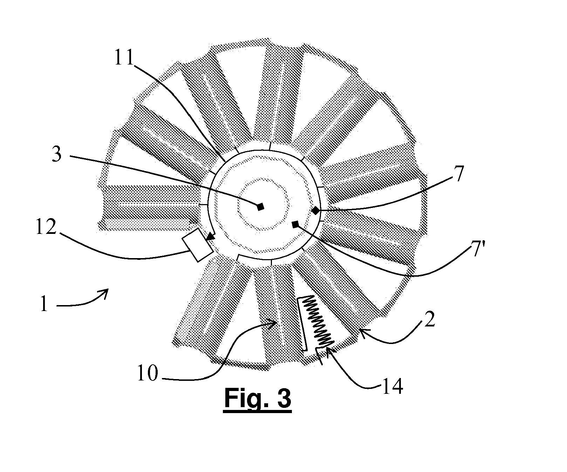

In a characteristic way the central area 5 is provided with a perimetral biosanitary corridor 7 for movement of the animals (not visible in Fig.1), with access to the confinement modules 2. Same central area 5 may be provided with two co-centred perimetral biosanitary corridors 7 and 7', as presented in the example in Fig.3.

The modules of confinement 2 remain connected through perimetral biosanitary corridor 7, thus guaranteeing an optimal level of sanitary and biosecurity in order to avoid, in case of infection or disease of any animal from confinement module 2, for the disease to spread among the rest of the modules of confinement 2. With this feature, facility 1 can become a so-called facility 1 of closed cycle, inside which all of the animals can be confined without introducing the animals from the outside.

Each confinement module 2 is provided with means for air and gas channelling 10, which are generated inside towards the central area 5, see Fig.1. In central area 5, as seen in Fig.3, there is a central air collector 11 connected to an air treatment unit 12. It is previewed that the means for air and gas conduct 10 work with negative pressure in order to guarantee the evacuation of all the air and gases generated inside the confinement modules 2 in a non-forced way towards the mentioned unit of air treatment 12, which is provided with appropriate filters. Moreover, in order to guarantee fresh air supply in each confinement module 2, entries for outdoor air are previewed through air supply channels 14, which are presented as a scheme in Fig.3. and detailed more specifically further. Even so, in other realizations, which are not presented, the ventilation can be forced through usage of extractor fans, for example.

The means of air and gas channelling 10 of this facility follow a similar distribution of the feed transportation system 3, which will be described further, leaving the means of air and gas channelling 10 distributed in a radial manner around a perimetral channel, which acts as a central air collector 11. This is how the recovery of gases produced in each confinement module 2 is optimized, in order for them to be treated before releasing into the atmosphere.

With the aim of favouring natural air circulation within each confinement module 2, these are provided with an arched convex cover, which has a fluting in its upper part, preferably in a shape of an inverted U, as a guide in order for the gases to circulate in the direction of central area 5. These flutings are covered with translucent material at least in their upper part in order to allow natural light entrance inside their corresponding modules 2.

On the other hand, for better temperature control of confinement modules 2, it is foreseen that the modules and free space between them has to be covered with isolating material 20, except for the free space between two adjacent modules. The free space between two adjacent confinement modules 2 which is not covered by isolating material is used as the way of access to the central area 5 of the facility 1. Besides, in order to air-condition the inside of confinement modules 2, the air supply channels 14 inside confinement modules 2, which supply fresh air from the outside, are located in the free space between two modules of confinement 2, adjacent and buried, or else they run under the layer of isolating material 20, following a coil-shaped trajectory. Fig.3 reflects one of these conducts for outside air supply 14 in a scheme.

In a preferred realization, it is foreseen that the layer of isolating material 20 is formed by substrate of soil which serves as base for plants and contributes to maintenance of optimal temperature.

According to another aspect, the system of feed transportation 4 for the facility 1, represented as a scheme in Fig.2, includes a series of radial channels 41, 42, 43, 44, 45, 46, 47 and 48, see Fig.2, for the transportation of feed from central area 5, where the means for preparing the feed 3 are located, to the feeders from 51 to 60 of correspondent modules of confinement 2, and the valves 32 for selective distribution of feed through mentioned channels. In the presented example it is foreseen that the transportation system 4 supplies feed in an independent manner to two feeders 51 and 52 for gestating sows, two feeders 59 and 60 for weaning sows, three feeders 56, 57 and 58 for finishers and three feeders 53, 54 and 55 for fattening pigs.

As Fig.2 shows, the system of transportation 4 includes perimetral channels 49a, 49b, and 49c, connected between two radial channels 41 and 42, 43 and 44, 45 and 46 respectively, associated to two confinement modules 2 not necessarily adjacent. Each module of confinement 2 is provided by means of feed dispensation to feeders 51 to 60 located along its route.

This is how, for example, in the realization scheme presented in Fig.2 there are two confinement modules 2 adapted for gestating sows, who are receiving feed from radial channel 41, connected to the central area 5 and distributing feed to feeders 51 and 52 through perimetral channel 49a, later returning the rest of unused feed back through radial channel 42. These feed channels for gestating sows are not influenced by the rest of the population of the facility, as for example the feeders 59 and 60 for weaning sows are supplied through correspondent channels 47 and 48, thus allowing that in case of malfunction or maintenance in any channels feeding of other animals in confinement modules 2 becomes equally possible. In particular, these radial channels 47 and 48 serve to supply feed for feeders 59 and 60, later returning the extra feed. At the same time, this particular distribution of feed transportation system 3 allows it to be much more durable, and that in case any maintenance, exchange or repair task is needed, as to channels, valves or of any other element of the feed transportation system 3, this task can be carried out safely, fast and efficiently without affecting overall functioning of the facility 1.

In a similar way, in the same scheme representation of Fig.2 , there are tree confinement modules 2 adapted for fattening pigs, to which the feed is supplied through radial channel 43, which is connected to central area 5, and the feed is distributed to feeders 53, 54 and 55 through perimetral channel 49b, to later return the extra feed through radial channel 44 back again. These feed channels are not affected by the rest of the feeding of the rest of the population of the facility, as for example feeders 56, 57 and 58 of the finisher pigs are supplied through correspondent radial channels 45 and 46, and perimetral channel 49c.

This feed transportation system 3 reduced significantly the length of feed supply channels compared to facilities that do not have a radial distribution, and in case that the feed is liquid, it makes the cleaning of the channels easier, without the usual waste of water which takes place in conventional farming facilities.

It is foreseen that the feed to use is known as hydroponic green fodder, which is the result of germination of cereal seeds, such as barley, wheat, oats and corn. The germination process takes place during a short period of time, between 10 and 12 days, capturing sun's energy and absorbing the minerals, which the nutritious solution contents.

The production of hydroponic green fodder is ideal for this facility 1 as it does not require bit land surface or long production time, nor expensive forms of preserving or storing. Hydroponic green fodder is produced in central area 5 of the facility 1 in plastic trays, placed on metal shelves. For instance, one kilogram of barley seeds after eleven days becomes six kilogram of hydroponic green fodder, which can be consumed in its totality (roots, stems, leaves and rest of the seeds), providing a complex formula of proteins, energy, vitamins and minerals. This crop is produced inside the central area 5, which acts as a greenhouse thanks to its translucent ceiling, which allows crop's protection from low temperatures, and permits direct expose to sunshine. In another not presented realization, hydroponic green fodder can be located in the perimetral corridor 7' of the central area 5. In the same central area 5 there is a kitchen, equipped with means of feed preparation 3, from produced fodder the feed is prepared in order to feed the livestock through feed transportation system 4, which distributes the feed to correspondent feeders.

Apart from confinement modules 2, it is foreseen that for each one of the modules of the facility 1, there is a terrace 40, delimited and without a ceiling (see Fig.1), so that the animals can wander around, but under control. These terraces 40 are also useful in case maintenance tasks have to be carried out in any of the modules, and it is necessary for the animals to be out of them. In these cases, the animals can be placed outside on the terrace while these tasks are being fulfilled.

As a whole, facility 1 is an autonomous facility, which provides a significant reduction of usual excessive consumption of water and feed in conventional linear facilities. Besides, at the level of visual impact, facility 1 resembles a flower with its petals, confinement modules 2, thus integrating easily in the natural environment.

Lastly, it is worth mentioning that an advantage of the facility 1 is that a whole family can subsist thanks to it, which is a contribution of this facility, with this particular confinement and feeding method, to stop depopulation of rural areas and create quality meat.

## Claims

1. Facility (1) for rearing barn animals, specifically for pig rearing, which includes
a plurality of confinement modules (2) for the animals, covered and equipped with respective feeders (51 to 60);
means of feed preparation;
a feed transportation system (4) from said means of feed preparation to the feeders;
**characterized in that** the confinement modules are distributed in a radial form around a central area (5), which is covered and contains the means of feed preparation, and which is provided with at least one perimetral biosanitary corridor (7) for the movement of animals, with access to confinement modules; and also by the feed transportation system including a series of radial channels (41 to 48) for the transportation of feed from the central area to the respective feeders of confinement modules, and the valves for selective distribution of the feed through the channels.

2. Facility according to claim 1, **characterized in that** the system of transportation (4), including perimetral channels (49a, 49b and 49c), connected between two radial channels (41) associated to two confinement modules (2), which are not necessarily adjacent, equipped with means of feed dispensation to the feeders (51 to 60) of the modules located along its route.

3. Facility (1) according to any of the claims 1 or 2, **characterized in that** the confinement modules (2) being provided with means of air and gas channelling (10), for air and gases generated in its interior to be directed towards the central area (5), where the central air collector (11) is located, connected to a unit of air treatment (12).

4. Facility (1) according to any of the abovementioned claims, **characterized in that** the confinement modules (2) and the free space between them, except the free space between two adjacent modules, being covered by a layer of isolating material (20).

5. Facility (1) according to the previous claim, **characterized in that** the layer of isolating material (20) including a substrate of soil, which preferably serves as a base for plants and crops.

6. Facility (1) according to claim 4 or 5, **characterized in that** the fact that at least between two adjacent confinement modules (2), under a layer of isolating material (20), inside air supply channels (14) are located, following a coil-shaped trajectory.
